# EUROPÄISCHE PATENTSCHRIFT

(11) **EP 2 467 634 B1**
(45) Veröffentlichungstag und Bekanntmachung des Hinweises auf die Patenterteilung: **15.07.2020**
(21) Anmeldenummer: 10766221.5
(22) Anmeldetag: 23.08.2010
(51) Int. Cl.: F16M 11/12, F16M 11/18, G12B 5/00

(54) **HALTERUNG FÜR EINEN BEWEGBAREN SENSOR**
HOLDING DEVICE FOR A DISPLACEBLE SENSOR
SUPPORT POUR CAPTEUR MOBILE

(30) Priorität: 05.10.2009 DE 102009048202; 21.08.2009 DE 102009038313
(43) Veröffentlichungstag der Anmeldung: 27.06.2012
(73) Patentinhaber: Airbus Defence and Space GmbH, 85521 Ottobrunn (DE)
(72) Erfinder: CHRISTOF, Horst, 85653 (DE); SANDER, Jörg, 89075 Ulm (DE); BICHLER, Bartholomäus, 83064 Raubling (DE); LÖHNER, Andreas, 89231 Neu-Ulm (DE); DITTMAR, Reiner, 88471 Laupheim (DE); ROTHMAIER, Ulrich, 88480 Achstetten (DE)
(74) Vertreter: LKGLOBAL Lorenz & Kopf PartG mbB Patentanwälte
(86) Internationale Anmeldenummer: PCT/DE2010/000983
(87) Internationale Veröffentlichungsnummer: WO 2011/020470

(56) Entgegenhaltungen:
- EP-A1- 0 155 922
- US-A- 4 318 522
- US-A- 4 575 039
- US-A- 4 802 640
- US-A- 5 860 327

## Beschreibung

Die vorliegende Erfindung betrifft eine Halterung für einen bewegbaren Sensor, der auf ein Ziel ausrichtbar ist, an einer Tragstruktur. Derartige Sensoren können beispielsweise Radarsensoren, Kamerasensoren oder allgemein Sender und/oder Empfänger von elektromagnetischer Strahlung sein.

Die Bezeichnung "Sensor" für ein ausrichtbares Funktionselement im Kontext der vorliegenden Anmeldung ist somit nicht auf Empfangseinrichtungen begrenzt, sondern kann ebenso Sendeeinrichtungen oder kombinierte Sende-/ Empfangseinrichtungen für elektromagnetische Strahlung umfassen.

Um derartige Sensoren auf ein Ziel ausrichten zu können, ist eine bewegbare Halterung für den Sensor erforderlich. Insbesondere, wenn die Tragstruktur selbst ebenfalls bewegbar ist, beispielsweise Bestandteil eines Luftfahrzeugs, eines Raumfahrzeugs, eines Wasserfahrzeugs oder eines Landfahrzeugs ist, muss diese Halterung in der Lage sein, den Sensor so nachführen zu können, dass dieser auf das Ziel ausgerichtet bleibt. Das trifft auch zu, wenn sich das Ziel bewegt.

US 5,860,327 sowie EP 0 155 922 A1 beschreiben für Sensoren geeignete Halteanordnungen mittels denen die Sensoren auf ein mögliches Ziel ausrichtbar sind. Durch die Anordnung der Drehachsen zueinander führt die Nachführung des Sensors auf ein Ziel allerdings zu einer Taumelbewegung des Sensors, was sie wenig geeignet für den Einsatz in der Luftfahrt macht.

Aus US 4,575,039 ist eine Anordnung bekannt, bei welcher sämtliche Drehachsen in einem Punkt außerhalb eines Sensors zusammenfallen. Die Bewegung des Sensorschwerpunkts erfolgt somit auf einer Kugeloberfläche, was die Anordnung ebenfalls wenig geeignet für den Einsatz in der Luftfahrt macht.

Aus US 4,318,522 ist eine Halteanordnung für einen Satelliten bekannt. Die Halteanordnung weist drei Drehachsen auf, welche jeweils schräg zueinander liegen und welche mit dem Schwerpunkt des Satelliten zusammenfallen. Zudem weist die Halterung motorisch drehbare Hebelarme auf.

Aufgabe der vorliegenden Erfindung ist es, eine Halterung für einen innerhalb einer Flugzeugnase einsetzbaren bewegbaren Sensor, der auf ein Ziel ausrichtbar ist, an einer Tragstruktur anzubringen, wobei die Halterung einen kompakten Aufbau aufweist, eine schnelle Ausrichtung des Sensors auf das Ziel ermöglicht und weiterhin eine schnelle Nachführung des Sensors bei bewegtem Ziel und/oder bewegter Tragstruktur gestattet.

Diese Aufgabe wird durch die in den Patentansprüchen 1 und 3 angegebene Halterungen gelöst. Die erfindungsgemäße Halterung gemäß Anspruch 1 weist drei motorisch drehbare Ringe zur Aufnahme eines Sensors auf, wobei die Drehachsen der drei motorisch drehbare Ringen schräg zueinander liegen. Die erfindungsgemäße Halterung gemäß Anspruch 3 weist zwei motorisch drehbare Ringe zur Aufnahme eines Sensors auf, wobei die Drehachsen der zwei motorisch drehbare Ringen schräg zueinander liegen.

Vorteilhafte Ausführungen der Erfindung sind Gegenstand von Unteransprüchen.

Im Weiteren wird als Sensor ein aktiver und/oder passiver Sensor bzw. eine Antenne verstanden.

Erfindungsgemäß schneiden sich die Drehachsen der drehbar gelagerten Ringe in einem virtuellen Drehpunkt, wobei der virtuelle Drehpunkt und der geometrische Schwerpunkt des Sensors zusammenfallen. Der geometrische Schwerpunkt kann auch der Masseschwerpunkt des Sensors sein. Der virtuelle Drehpunkt kann auch in der Nähe des geometrischen Schwerpunkts des Sensors liegen.

Gemäß einem ersten Aspekt der Erfindung nach Anspruch 1 ist ein erster drehbar gelagerter Ring mit einer Grundfläche und einer Deckfläche über ein mit der Grundfläche verbundenes erstes Lager mit einer Tragstruktur der Halterung verbunden. Ein zweiter drehbar gelagerter Ring mit einer Grundfläche und einer Deckfläche ist über ein mit der Grundfläche verbundenes zweites Lager mit der Deckfläche des ersten drehbar gelagerten Rings und ein mit der Deckfläche verbundenes drittes Lager mit einem dritten drehbar gelagerten Ring verbunden, wobei die Flächennormale der Grundfläche des ersten drehbar gelagerten Rings und die Flächennormale der Deckfläche des dritten drehbar gelagerten Rings einen Winkel α₁ von 0°-90° aufweisen.

Gemäß einem zweiten Aspekt der Erfindung nach Anspruch 3 ist ein erster drehbar gelagerter Ring mit einer Grundfläche und einer Deckfläche über ein mit der Grundfläche verbundenes erstes Lager mit einer Tragstruktur der Halterung verbunden und über ein mit der Deckfläche verbundenes zweites Lager mit einem zweiten drehbar gelagerten Ring verbunden, wobei die Flächennormale der Grundfläche des ersten drehbar gelagerten Rings und die Flächennormale der Deckfläche des zweiten drehbar gelagerten Rings einen Winkel α₁ von 0°-90° aufweisen.

Die Erfindung wird im Folgenden anhand von Zeichnungen näher beschrieben und erläutert. Es zeigen:
- Fig. 1: eine erfindungsgemäße Halterung gemäß Anspruch 1 in 2 Stellungen,
- Fig. 2: eine erfindungsgemäße Halterung gemäß Anspruch 1 in Ausrichtung nach oben,
- Fig. 3: eine erfindungsgemäße Halterung gemäß Anspruch 1 Ausrichtung nach vome,
- Fig. 4: eine erfindungsgemäße Halterung der gemäß Anspruch 3,
- Fig. 5: eine schematische Darstellung der Fig. 1 bzw. Fig. 2 bzw. Fig. 3,
- Fig. 6: eine erfindungsgemäße Halterung in Bezug auf ein Sensorziel.

Für die Ausrichtung eines Sensors bzw. einer Antenne sind gemäß der Erfindung zwei oder drei motorisch angetriebene Ringe erforderlich, um innerhalb eines bestimmten Winkelspektrums den Sensor stets senkrecht auf einen Zielpunkt auszurichten.

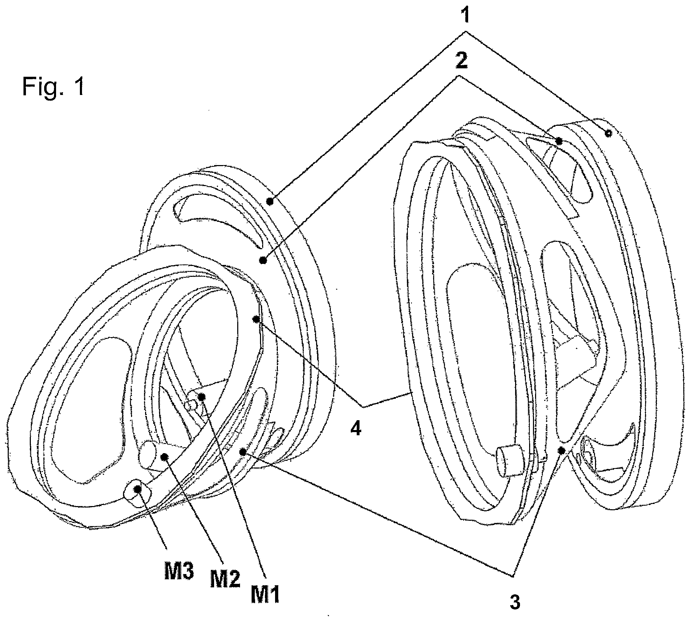

Fig. 1 zeigt eine Halterung mit einem ersten drehbar gelagerten Ring 2, einem zweiten drehbar gelagerten Ring 3 und einem dritten drehbar gelagerten Ring 4. Der erste drehbar gelagerte Ring 2 ist an einer Tragstruktur 1 der Halterung befestigt. Der zweite drehbar gelagerte Ring 3 ist zwischen dem dritten drehbar gelagerten Ring 4 und dem ersten drehbar gelagerten Ring 2 angeordnet. An dem dritten drehbar gelagerten Ring 4 ist der Sensor (nicht dargestellt) befestigt. An den drehbar gelagerten Ringen 2, 3, 4 sind zusätzlich Motoren M2, M3, M4 befestigt zum Antrieb der Ringe 2, 3, 4.

Der dritte drehbar gelagerte Ring 4, welcher mit dem Sensor verbunden ist, dient der Rollkompensation. Dieses Nichtverdrehen der Antenne bezüglich einer bestimmten Ebene, könnte auch mechanisch, z.B. mittel eines an der Tragstruktur 1 fixierten Kardangelenkes (nicht dargestellt) erfolgen.

Der erste drehbare gelagerte Ring 2 wird auch als Kippkonus, der zweite drehbar gelagerte Ring 3 als Rotationskonus und der vierte drehbar gelagerte Ring 4 als Polarisationskonus bezeichnet.

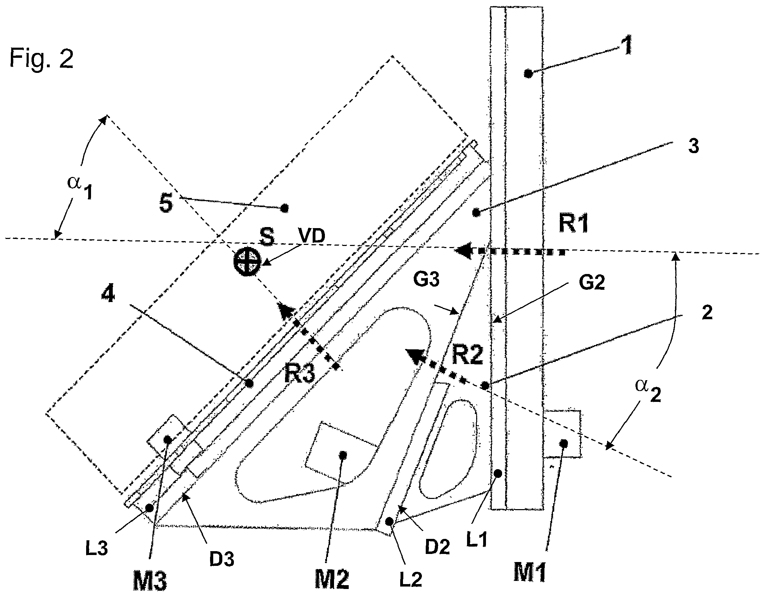

Fig. 2 zeigt eine erfindungsgemäße Halterung gemäß Anspruch 1 in einer ersten Ausrichtung nach oben. Um den Sensor in einem gewissen Sichtbereich in eine definierte Richtung auszurichten zu können, ohne dabei ein eingeschränktes Freigängigkeitsvolumen zu überschreiten, sind die Drehachse R1, R2, R3 der drei zueinander drehbar gelagerten Ringe 2, 3, 4 derart schräg im Raum angeordnet, dass sich diese Drehachse R1, R2, R3 in einem virtuellen Drehpunkt VD schneiden. Dieser virtuelle Drehpunkt VD fällt mit dem geometrischen S des Sensors 5 zusammen. In einer Ausführungsform der Erfindung kann der virtuelle Drehpunkt VD auch in einem vorgebbaren Umkreis um den geometrischen S des Sensors 5 liegen. Durch diese Anordnung der Drehachsen R1, R2, R3 können die geforderten Sensorwinkel realisiert werden.

Ein erster drehbar gelagerter Ring 2 weist eine Grundfläche G2 und einer Deckfläche D2 auf. An der Grundfläche G2 ist ein erstes Lager 1 befestigt, welches mit der Tragstruktur 1 der Halterung verbunden ist. Ein zweiter drehbar gelagerter Ring 3 weist eine Grundfläche G3 und einer Deckfläche D3 auf. Über ein mit der Grundfläche G3 verbundenes zweites Lager L2 ist der zweite Ring 3 mit der Deckfläche D2 des ersten drehbar gelagerten Rings 2 verbunden. Über ein mit der Deckfläche D3 verbundenes drittes Lager L3 ist der zweite Ring 3 mit einem dritten drehbar gelagerten Ring 4 verbunden. Die Flächennormale R1 der Grundfläche G2 des ersten drehbar gelagerten Rings 2 und die Flächennormale R3 der Deckfläche D3 des zweiten drehbar gelagerten Rings 3 bilden einen Winkel α₁. Der Winkel α₁ kann einen Winkelbereich von 0°-90° betragen.

Die Flächennormale R1 der Grundfläche G2 des ersten drehbar gelagerten Rings 2 und die Flächennormale R2 der Grundfläche G3 des zweiten drehbar gelagerten Rings 3 bilden einen Winkel α₂. Dieser Winkel beträgt 0°-90°.

Die Halterung weist Motoren M1, M2, M3 auf. Diese Motoren M1, M2, M3 sind jeweils mit den drehbar gelagerten Ringe 2, 3, 4 zum Antrieb der Lager L1, L2, L3 verbunden. Die motorischen Antriebe M1, M2, M3 treiben die jeweiligen drehbar gelagerten Ringe 2, 3, 4 mittels eines Ritzels (nicht dargestellt) über einen Zahnkranz (nicht dargestellt) an.

Die Flächennormalen R1, R2, R3 bilden die Drehachsen der entsprechenden Lager L1, L2, L3. Aufgrund der Verbindungen der Lager L1, L2, L3 mit den drehbaren Ringen 2, 3, 4 bilden die Flächennormalen R1, R2, R3 zugleich die Drehachsen der Ringe 2, 3, 4.

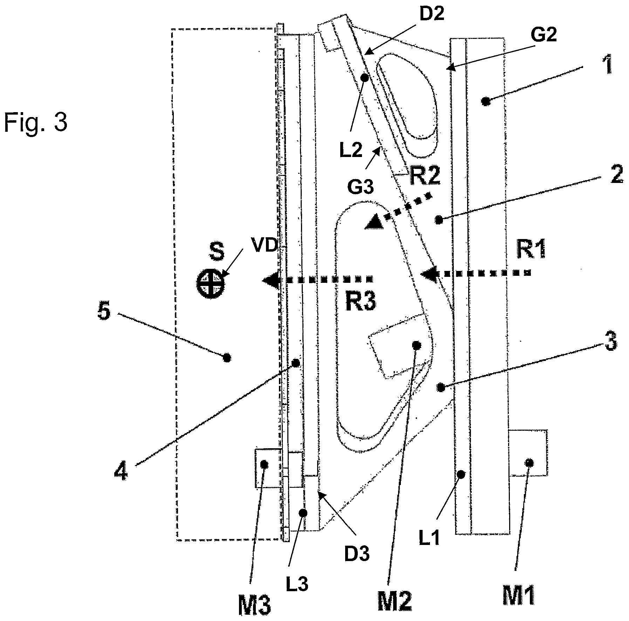

Fig. 3 zeigt eine erfindungsgemäße Halterung gemäß Anspruch 1 in einer zweiten Ausrichtung nach vorne. Entsprechende Bezugszeichen in Fig. 2 gelten auch in der Fig. 3. In der Darstellung in Fig. 3 liegen die Drehachsen R1 und R3 auf einer gemeinsamen Geraden.

Ist eine Rollkompensation, d.h. eine Achse des Sensors 5 ist immer parallel zu einer Ebene (z.B. Horizontalen) erforderlich, so erfolgt dies mit dem dritten drehbar gelagerten Ring 3 auf dem der Sensor 5 fixiert ist. Dieser Ring 3 wird auch als Polarisationsring bezeichnet.

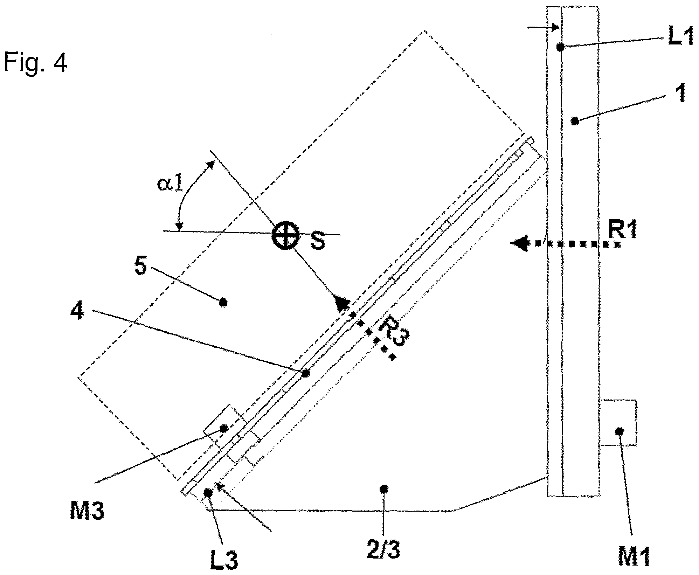

Fig. 4 zeigt eine erfindungsgemäße Halterung gemäß Anspruch 5. Entsprechende Bezugszeichen in Fig. 2 bzw. Fig. 3 gelten auch in Fig. 4. In Fig. 4 sind die drehbar gelagerten Ringe 2 und 3 zu einem gemeinsamen Ring 2/3 zusammengefasst. Die Verbindung des drehbar gelagerten Rings 2/3 erfolgt entsprechend den Erläuterungen zu Fig. 2.

Die Drehachsen R1 und R3 schneiden sich im virtuellen Drehpunkt VD, welcher in mit dem geometrischen Schwerpunkt S des Sensors 5 zusammenfällt.

Derartige Sensorhalterungen besitzen einen leichten Aufbau. Derartige Sensorhalterungen sind biege- und rotationssteif.

Der trichterförmige Aufbau der Ringe 2, 3, 4 und 2/3, wie in Fig. 2 bis Fig. 4 gezeigt, ermöglichen im Innenraum der Trichter eine geschützte und ungestörte Verlegung aller Versorgungsleitungen, wie Datenkabel, Stromkabel und Kühlflüssigkeitsleitungen (nicht dargestellt).

Bei einer derartigen Sensorhalterung handelt es sich um einfache Rotationsbewegungen, deren Lagerungen und Antriebe einfach und zuverlässig gestaltet werden können und im Innenraum der Trichter geschützt integriert werden können.

Die Antriebe M1, M2, M3 übernehmen hauptsächlich nur die Rotationsträgheitskräfte des Sensors 5.

Die Hauptlasten, welche durch von außen wirkende Beschleunigungskräfte (z.B. Flugzeugfliehkräfte) entstehen, werden hauptsächlich von den Trichtern und deren Lagerungen übertragen. Es werden keine zusätzlichen Drehmomente erzeugt, die von den Antrieben kompensiert werden müssen.

Diese Kinematik ermöglicht eine optimale Nachführung des Sensors 5 (z. B. einer Radarantenne) in einem räumlich sehr eingeschränkten Raum, erfindungsgemäß einer Flugzeugnase. Die Schwenkbarkeit um die Raumachsen R1 und R2 gestattet ein Schwenken des Sensors 5 in jede Richtung innerhalb des durch die entsprechende Konstruktion vorgegebenen Schwenkbereichs (Fig.2 und Fig. 3).

Entsprechend kann auch die Nachführung des Sensors 5 kontinuierlich in jede dieser Richtungen erfolgen. Je nach Bauweise kann durch Einsatz von Drehdurchführungen eine kontinuierliche Rotation erfolgen. Sind keine Drehdurchführungen vorgesehen, können nur teilweise kontinuierliche Rotationen erfolgen.

Vorzugsweise ist eine Steuerungseinrichtung zur Steuerung der jeweiligen Drehantriebe vorgesehen, um die Rotationswinkel der einzelnen Rotationstrichter bzw. der Sensoraufnahmeringes zu harmonisieren, und somit die Schwenkbewegung des Sensors 5 zu steuern.

Die Steuerungseinrichtung muss 3 Drehstellungen bei Variante 1 (Fig. 2 und Fig. 3) harmonisieren, wenn eine motorische Polarisationskompensation realisiert werden soll. Entfällt diese Polarisationskompensation, bzw. wird diese mechanisch erzielt, so hat die Steuerungseinrichtung nur 2 Drehbewegungen zu harmonisieren.

Die Steuerungseinrichtung bei Variante 2 (Fig. 4) muss 2 Drehstellungen harmonisieren, wenn eine motorische Polarisationskompensation realisiert werden soll.

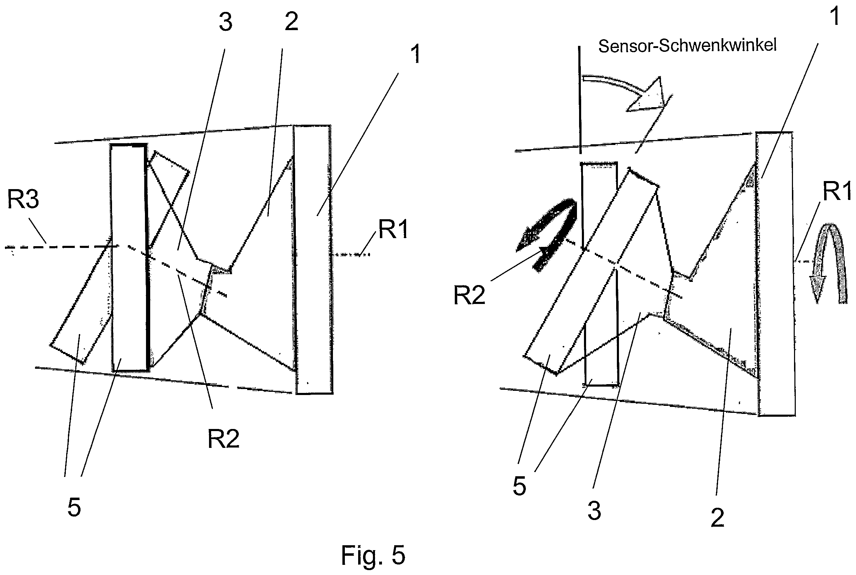

Eine derartige Kinematik ermöglicht bei leichter und kompakter Bauweise eine kontinuierliche Sensornachführung in allen Richtungen bei optimaler Krafteinleitung und niedrigen zu drehenden Massen. Selbst bei sich stetig verändernden Koordinaten des Ziels und einer sich bewegenden Tragstruktur, beispielsweise bei einem fliegenden Flugzeug oder einem fahrenden Schiff bzw. Landfahrzeug, gestattet es die Kinematik der erfindungsgemäßen Halterung, den Sensor, beispielsweise eine Radarantenne, kontinuierlich innerhalb des konstruktiv vorgegebenen Schwenkbereichs nachzuführen (Fig. 5).

Mit dieser Halterung ist es möglich, bei einem Sensor, der als Radarantenne ausgebildet ist oder eine Radarantenne aufweist, den Sensor nicht nur nachzuführen, sondern außerdem die die Polarisationsebene der Antenne stets in Bezug auf das Ziel konstant ausgerichtet zu halten. Dies trifft natürlich auch für andere Arten von Sensoren zu, die vorzugsweise in einer konstanten Ausrichtung auf das Ziel gehalten werden sollen, was beispielsweise auch für bildgebende Sensoren im Wellenlängenbereich des sichtbaren Lichts oder in einem anderen Wellenlängenbereich zutrifft.

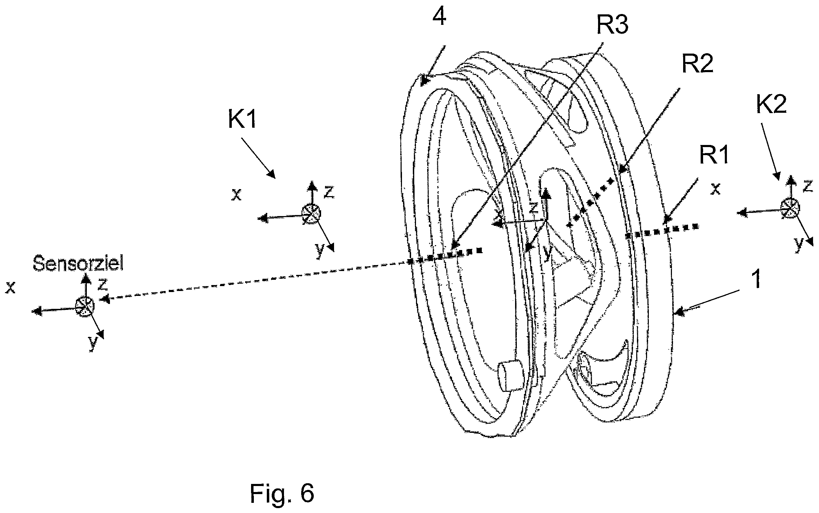

Wird eine derartige Halterung beispielsweise in einem Flugzeug eingesetzt, so können gemäß dieser vorteilhaften Weiterbildung sowohl Bewegungen des Flugzeugs um die Nickachse (Querachse) und um die Gierachse (Hochachse), als auch Bewegungen des Flugzeugs um dessen Rollachse (Längsachse) kompensiert werden. In entsprechender Weise können auch Bewegungen des Sensorziels kompensiert werden (Fig. 6). Der Sensor ist um alle Achsen des zentralen Rotationspunktes gleichzeitig rotierbar. Der Hauptanteil der Sensor-Massenkräfte wird über die Drehringe an die Flugzeugstruktur abgeleitet.

Die Halterung ermöglicht eine kontinuierliche Nachführbarkeit eines bewegten Sensorziels bei gleichzeitiger Kompensation einer sich im Raum drehenden Basisstruktur, welche z.B. an einem Flugzeug montiert ist.

Die y-Achse des Polarisationsrings 4 (bzw. des Sensors 5) bleibt parallel gegenüber der xy-Ebene des ersten Rings 2 bzw. des Flugzeugs (Fig. 6). In Fig. 6 ist mit K1 das Koordinatensystem des Polarisationsrings 4 bzw. des Sensors 5 bezeichnet. Mit K2 ist das Koordinatensystem der Tragstruktur 1 bzw. eines die Tragstruktur 1 beinhaltendes Flugzeugs bezeichnet.

Vorteilhafterweise weist der Sensor eine Sende- und/oder Empfangsantenne auf. In einer besonders bevorzugten Ausführungsform der Erfindung ist der Sensor als Radarsensor ausgebildet und weist beispielsweise eine Radarantenne auf. Die Erfindung ist jedoch nicht auf einen Radarsensor beschränkt, sondern die erfindungsgemäße Halterung ist auch für andere Sensoren, beispielsweise bildgebende Sensoren oder andere Arten von Antennen oder beispielsweise auch für ein Echolot geeignet. Dabei ist die Erfindung nicht darauf beschränkt, dass der Sensor einen Empfänger oder eine Antenne aufweist oder darstellt, sondern er ist ein ausrichtbares Funktionselement, das gemäß der Definition des Begriffs "Sensor" in dieser Anmeldung von einer Sendeeinrichtung oder einer Antenne davon gebildet sein kann oder diese aufweisen kann oder eine Kombination aus Sende- und Empfangseinrichtung oder diesbezüglichen Antennen darstellen kann.

Als Sendeeinrichtung in diesem Sinn ist zum Beispiel auch ein Energiestrahler (zum Beispiel ein Laserstrahler) einer Strahlenwaffe zu verstehen.

### Bezugszeichenliste

- 1: Tragstruktur
- 2: Kippkonus
- 3: Rotationskonus
- 4: Polarisationsring
- 5: Sensor auf Polarisationsring 4 fixiert
- R1: Rotationsachse von Tragstruktur 1 und Kippkonus 2
- R2: Rotationsachse von Kippkonus 2 und Rotationskonus 3
- R3: Rotationsachse von Polarisationsring 4 und Rotationskonus 3
- M1: Motor1 dreht den Kippkonus 2 gegenüber der Tragstruktur
- M2: Motor2 dreht den Rotationskonus 3 gegenüber dem Kippkonus 2
- M3: Motor3 dreht den Polarisationsring 4 gegenüber dem Rotationskonus 3
- S: Schwerpunkt des Sensors 5
- 2/3: einstückiger Kipp-/Rotationskonus
- VD: virtueller Drehpunkt
- K1: Koordinatensystem des Polarisationsrings 4
- K2: Koordinatensystem der Tragstruktur 1

## Patentansprüche

1. Halterung für einen bewegbaren innerhalb einer Flugzeugnase nachführbaren Sensor (5), wobei die Halterung drei motorisch drehbare Ringe (2, 3, 4) zur Aufnahme eines Sensors (5) aufweist, wobei die Drehachsen (R1, R2, R3) der drei motorisch drehbaren Ringe (2, 3, 4) schräg zueinander liegen, wobei sich die Drehachsen (R1, R2, R3) der drehbar gelagerten Ringe (2, 3, 4) in einem virtuellen Drehpunkt (VD) schneiden, wobei ein erster drehbar gelagerter Ring (2) mit einer Grundfläche (G2) und einer Deckfläche (D2) über ein mit der Grundfläche (G2) verbundenes erstes Lager (L1) mit einer Tragstruktur (1) der Halterung verbunden ist und dass
ein zweiter drehbar gelagerter Ring (3) mit einer Grundfläche (G3) und einer Deckfläche (D3) über ein mit der Grundfläche (G3) verbundenes zweites Lager (L2) mit der Deckfläche (D2) des ersten drehbar gelagerten Rings (2) und ein mit der Deckfläche (D3) verbundenes drittes Lager (L3) mit einem dritten drehbar gelagerten Ring (4) verbunden ist,
wobei die Flächennormale (R1) der Grundfläche (G2) des ersten drehbar gelagerten Rings (2) und die Flächennormale (R3) der Deckfläche (D3) des zweiten drehbar gelagerten Rings (3) einen Winkel α₁ von 0°-90° aufweisen;
**dadurch gekennzeichnet, dass**
der erste und der zweite drehbar gelagerte Ring (2, 3) als konusförmige Trichter ausgebildet sind, wobei in einem Innenraum der konusförmigen Trichter die Lager (L1, L2, L3) der drehbar gelagerten Ringe (2, 3) integriert sind und an den drehbar gelagerten Ringen (2, 3, 4) motorische Antriebe (M1, M2, M3) zum Antrieb der Ringe (2, 3, 4) befestigt sind, wobei die Antriebe (M1, M2, M3) den jeweiligen drehbar gelagerten Ring (2, 3, 4) mittels eines Ritzels über einen Zahnkranz antreiben.

2. Halterung nach Anspruch 1,
**dadurch gekennzeichnet, dass**
die Flächennormale (R1) der Grundfläche (G2) des ersten drehbar gelagerten Rings (2) und die Flächennormale (R2) der Grundfläche (G3) des zweiten drehbar gelagerten Rings (3) einen Winkel α₂ von 0°-90° aufweist.

3. Halterung für einen bewegbaren Sensor (5) zur Anordnung in einer Flugzeugnase, wobei die Halterung zwei motorisch drehbare Ringe (2/3, 4) zur Aufnahme eines Sensors (5) aufweist, wobei die Drehachsen (R1, R2, R3) der zwei motorisch drehbare Ringe (2/3, 4) schräg zueinander liegen, wobei sich die Drehachsen (R1, R2, R3) der drehbar gelagerten Ringe (2/3, 4) in einem virtuellen Drehpunkt (VD) schneiden, wobei ein erster drehbar gelagerter Ring (2/3) mit einer Grundfläche (G2) und einer Deckfläche (D2) über ein mit der Grundfläche (G2) verbundenes erstes Lager (L1) mit einer Tragstruktur (1) der Halterung verbunden und über ein mit der Deckfläche (D2) verbundenes drittes Lager (L3) mit einem zweiten drehbar gelagerten Ring (4) verbunden ist,
wobei die Flächennormale (R1) der Grundfläche (G2) des ersten drehbar gelagerten Rings (2/3) und die Flächennormale (R3) der Deckfläche (D2) des zweiten drehbar gelagerten Rings (4) einen Winkel α₁ von 0°-90° aufweisen;
**dadurch gekennzeichnet, dass**
der drehbar gelagerte Ring (2/3) als konusförmiger Trichter ausgebildet ist, wobei in einem Innenraum des konusförmigen Trichters die Lager (L1, L2, L3) des drehbar gelagerten Rings (2/3) integriert sind und an den drehbar gelagerten Ringen (2, 3, 4) jeweils motorische Antriebe (M1, M3) zum Antrieb der Ringe (2, 3, 4) befestigt sind, wobei die Antriebe (M1, M2, M3) den jeweiligen drehbar gelagerten Ring (2/3, 4) mittels eines Ritzels über einen Zahnkranz antreiben.

4. Halterung nach einem der vorangehenden Ansprüche,
**dadurch gekennzeichnet, dass**
mittels der zwei oder drei motorisch drehbaren Ringe (2, 3, 4) die Polarisationsebene des Sensors (5) auf ein Ziel konstant ist.

## Claims

1. Holder for a movable sensor (5) which can be displaced within an aircraft nose, wherein the holder has three motor-rotatable rings (2, 3, 4) for accomodating a sensor (5), wherein the axes of rotation (R1, R2, R3) of the three motor-rotatable rings (2, 3, 4) are located obliquely in relation to one another, wherein the axes of rotation (R1, R2, R3) of the rotatably mounted rings (2, 3, 4) intersect at a virtual point of rotation (VD), wherein a base surface (G2) and a top surface (D2) of a first rotatably mounted ring (2) are connected to a carrying structure (1) of the holder via a first bearing (L1), which is connected to the base surface (G2), and in that
a base surface (G3) and a top surface (D3) of a second rotatably mounted ring (3) are connected to the top surface (D2) of the first rotatably mounted ring (2) via a second bearing (L2), which is connected to the base surface (G3), and to a third rotatably mounted ring (4) via a third bearing (L3), which is connected to the top surface (D3), wherein the surface normal (R1) of the base surface (G2) of the first rotatably mounted ring (2) and the surface normal (R3) of the top surface (D3) of the second rotatably mounted ring (3) are at an angle α₁ of 0°-90°;
**characterized in that**
the first and the second rotatably mounted rings (2, 3) are designed in the form of conical funnels, wherein the bearings (L1, L2, L3) of the rotatably mounted rings (2, 3) are integrated in an interior space of the conical funnels and motor drives (M1, M2, M3) for driving the rotatably mounted rings (2, 3, 4) are fastened on the rings (2, 3, 4), wherein the drives (M1, M2, M3) drive the respective rotatably mounted rings (2, 3, 4) by means of a pinion via a gear rim.

2. Holder according to Claim 1,
**characterized in that**
the surface normal (R1) of the base surface (G2) of the first rotatably mounted ring (2) and the surface normal (R2) of the base surface (G3) of the second rotatably mounted ring (3) are at an angle α₂ of 0°-90°.

3. Holder for a movable sensor (5) for arranging in an aircraft nose, wherein the holder has two motor-rotatable rings (2/3, 4) for accommodating a sensor (5), wherein the axes of rotation (R1, R2, R3) of the two motor-rotatable rings (2/3, 4) are located obliquely in relation to one another, wherein the axes of rotation (R1, R2, R3) of the rotatably mounted rings (2/3, 4) intersect at a virtual point of rotation (VD),
wherein a base surface (G2) and a top surface (D2) of a first rotatably mounted ring (2/3) are connected to a carrying structure (1) of the holder via a first bearing (L1), which is connected to the base surface (G2), and to a second rotatably mounted ring (4) via a third bearing (L3), which is connected to the top surface (D2),
wherein the surface normal (R1) of the base surface (G2) of the first rotatably mounted ring (2/3) and the surface normal (R3) of the top surface (D2) of the second rotatably mounted ring (4) are at an angle α₁ of 0°-90°;
**characterized in that**
the rotatably mounted ring (2/3) is designed in the form of a conical funnel, wherein the bearings (L1, L2, L3) of the rotatably mounted ring (2/3) are integrated in an interior space of the conical funnel and respective motor drives (M1, M3) for driving the rotatably mounted rings (2, 3, 4) are fastened on the rings (2, 3, 4), wherein the drives (M1, M2, M3) drive the respective rotatably mounted ring (2/3, 4) by means of pinion via a gear ring.

4. Holder according to one of the preceding claims, **characterized in that**
the polarization plane of the sensor (5) is kept constantly on a target by means of the two or three motor-rotatable rings (2, 3, 4).

## Revendications

1. Support pour un capteur mobile (5) asservissable à l'intérieur d'un nez d'aéronef, le support comprenant trois bagues rotatives motorisées (2, 3, 4) destinées à recevoir un capteur (5), les axes de rotation (R1, R2, R3) des trois bagues rotatives motorisées (2, 3, 4) étant obliques les uns par rapport aux autres, les axes de rotation (R1, R2, R3) des bagues montées rotatives (2, 3, 4) se coupant en un point de rotation virtuel (VD), une première bague montée rotative (2) pourvue d'une surface de base (G2) et d'une surface supérieure (D2) étant raccordée par l'intermédiaire d'un premier palier (L1), raccordé avec la surface de base (G2), avec une structure porteuse (1) du support, et en ce que
une deuxième bague montée rotative (3) pourvue d'une surface de base (G3) et d'une surface supérieure (D3) est raccordée par l'intermédiaire d'un deuxième palier (L2), raccordé avec la surface de base (G3), avec la surface supérieure (D2) de la première bague montée rotative (2) et un troisième palier (L3), raccordé avec la surface supérieure (D3), étant raccordé avec une troisième bague montée rotative (4),
la normale à la surface (R1) de la surface de base (G2) de la première bague montée rotative (2) et la normale à la surface (R3) de la surface supérieure (D3) de la deuxième bague montée rotative (3) présentant un angle α₁ de 0° à 90° ;
**caractérisé en ce que**
la première et la deuxième bague montée rotative (2, 3) sont configurées sous la forme d'un entonnoir conique, les paliers (L1, L2, L3) des bagues montées rotatives (2, 3) étant intégrés dans un espace intérieur de l'entonnoir conique, et des entraînements motorisés (M1, M2, M3) pour l'entraînement des bagues (2, 3, 4) étant fixés sur les bagues montées rotatives (2, 3, 4), les entraînements (M1, M2, M3) de la bague montée rotative respective (2, 3, 4) entraînant au moyen d'un pignon par l'intermédiaire d'une couronne dentée.

2. Support selon la revendication 1, **caractérisé en ce que** la normale à la surface (R1) de la surface de base (G2) de la première bague montée rotative (2) et la normale à la surface (R2) de la surface de base (G3) de la deuxième bague montée rotative (3) présentent un angle α₂ de 0° à 90°.

3. Support pour un capteur mobile (5) destiné à être agencé dans un nez d'aéronef, le support comprenant deux bagues rotatives motorisées (2/3, 4) destinées à recevoir un capteur (5), les axes de rotation (R1, R2, R3) des deux bagues rotatives motorisées (2/3, 4) étant obliques l'un par rapport à l'autre, les axes de rotation (R1, R2, R3) des bagues montées rotatives (2/3, 4) se coupant en un point de rotation virtuel (VD), une première bague montée rotative (2/3) pourvue d'une surface de base (G2) et d'une surface supérieure (D2) étant raccordée par l'intermédiaire d'un premier palier (L1), raccordé avec la surface de base (G2), avec une structure porteuse (1) du support, et par l'intermédiaire d'un troisième palier (L3), raccordé avec la surface supérieure (D2), avec une deuxième bague montée rotative (4),
la normale à la surface (R1) de la surface de base (G2) de la première bague montée rotative (2/3) et la normale à la surface (R3) de la surface supérieure (D2) de la deuxième bague montée rotative (4) présentant un angle α₁ de 0° à 90° ;
**caractérisé en ce que**
la bague montée rotative (2/3) est configurée sous la forme d'un entonnoir conique, les paliers (L1, L2, L3) de la bague montée rotative (2/3) étant intégrés dans un espace intérieur de l'entonnoir conique, et des entraînements motorisés (M1, M3) pour l'entraînement des bagues (2, 3, 4) étant fixés respectivement sur les bagues montées rotatives (2, 3, 4), les entraînements (M1, M2, M3) de la bague montée rotative respective (2/3, 4) entraînant au moyen d'un pignon par l'intermédiaire d'une couronne dentée.

4. Support selon l'une quelconque des revendications précédentes, **caractérisé en ce que** le plan de polarisation du capteur (5) est constant sur un objectif au moyen des deux ou trois bagues rotatives motorisées (2, 3, 4).
